# EUROPEAN PATENT SPECIFICATION

(11) **EP 1 642 796 B1**
(45) Date of publication and mention of the grant of the patent: **05.05.2010**
(21) Application number: 05021127.5
(22) Date of filing: 28.09.2005
(51) Int. Cl.: B60W 30/20, B60W 10/10, B60W 10/04, F02D 31/00, F02D 41/02, F02P 5/15

(54) **Method and device for vehicle driving control**
Vorrichtung und Verfahren für Fahrzeugantrieb
Dispositif et procédé pour l'entraînement d'un véhicule

(30) Priority: 30.09.2004 JP 2004286559
(43) Date of publication of application: 05.04.2006
(73) Proprietor: Bosch Corporation, Shibuya-ku Tokyo 150-8360 (JP); Toyota Jidosha Kabushiki Kaisha, Toyota-shi, Aichi-ken, 471-8571 (JP)
(72) Inventor: Hatakeyama, Tomohiro, Yokohama Kanagawa 224-8501 (JP); Yamazaki, Akinori, Yokohama Kanagawa 224-8501 (JP); Amano, Naoki, Toyota-shi Aichi-ken 471-8571 (JP); Otsubo, Masaki, Toyota-shi Aichi-ken 471-8571 (JP)
(74) Representative: Gesthuysen, von Rohr & Eggert

(56) References cited:
- EP-A2- 0 731 294
- EP-A2- 1 342 607
- DE-A1- 19 523 898
- DE-A1- 19 806 393
- US-A1- 2002 132 701
- US-B1- 6 360 154

## Description

The present invention relates to vehicle driving control of a vehicle in a creep driving state according to the preamble of claim 1. Furthermore, the present invention relates to a respective device.

In recent years, in accordance with the advancement of electronic control technology in vehicles, various functions for improving the running feeling, drivability, and the like have been proposed and developed, and vehicles equipped with such functions have been put into practical use.

As one of such functions provided in a vehicle and used in practice in order to improve drivability and so on of the vehicle, a so-called anti-jerk (jerk prevention) function has been generally known. An example of this function is disclosed in Japanese translation of PCT publication No. 2003-502599 and so on.

For example, when an accelerator pedal is depressed and a gear is shifted down, a vibration of a driving system occurs due to the fluctuation of an engine rotational inertia, and this vibration sometimes causes a vibration (jerk) of a vehicle body to give an uncomfortable feeling to a passenger. A function of suppressing this vibration and jerk of the vehicle body by delaying an ignition timing of an engine is known as the anti-jerk function.

Other examples are disclosed in, for example, Japanese Examined Patent Publication No. Hei 6-70471 and so on, in which the similar anti-jerk function is realized by controlling a clutch hydraulic pressure.

In one of other proposed examples, when the vehicle speed is reduced by shifting down a transmission, an amount of air supplied to an engine is increased, thereby suppressing, in particular, the occurrence of a jerk called a tip-in jerk, which occurs when a negative torque is changed to a positive torque in the transmission. Such an art is disclosed in, for example, Japanese Examined Patent Publication No. Hei 5-30975.

Such a jerk mainly occurs in a continuously variable transmission, but is possible to occur in other type of transmissions as well.

Incidentally, vehicle transmission control has been conventionally classified mainly into a manual transmission and an automatic transmission. In addition to these, a transmission system called an automated manual transmission has recently been put into practical use in order to realize both low power consumption of the manual transmission and driving easiness of the automatic transmission. This automated manual transmission is essentially a manual transmission, with an automatic clutch system and an automatic transmission function.

A transmission system as described above is disclosed in, for example, "Development of Motor-type Automated Manual Transmission, Yoshitaka Soga et. al., Paper in the JSAE 2003 Annual Spring Congress Proceedings, No. 59-03, p. 1-4, published on May 21, 2003 by the Society of Automotive Engineers of Japan".

In particular, a transmission system called a motor-type automated manual transmission (MMT) which uses a motor actuator for the connection of a clutch and the shift and selection of a transmission gear is in general use.

Some of the vehicles equipped with such a MMT has the anti-jerk function in order to suppress the occurrence of the aforesaid jerk.

However, the vehicle having the anti-jerk function has the following problem. That is, at the time of the gear change or the depression of an accelerator for starting, the anti-jerk function works to detect a difference between the target speed of the engine (target engine speed) and the actual speed of the engine (actual engine speed), so that an ignition timing of the engine is delayed, which gives an unnecessary shock to the vehicle, This occurs because of the following reason.

The anti-jerk function is originally provided on the premise that there is no slip of the clutch, but in a vehicle in which a clutch becomes half-engaged at the time of the gear change or the like, there occurs a difference between the target engine speed and the actual engine speed while the clutch is in a half-engaged state, and the anti-jerk function detects this difference to delay the ignition timing of the engine.

DE 198 06 393 A1 discloses a method for controlling the engine of a vehicle. It deals with an anti-jerk control, In order to improve the anti-jerk function, a special initialization of a reference rotation speed of the anti-jerk control is provided. A new initialization of this reference rotation speed is intended when the clutch has been closed after a gear shift, but not during a gear shift.

EP 1 342 607 A2 discloses a method for vehicle driving control of a vehicle, wherein an operation of a transmission is controllable which has an anti-jerk function of adjusting an ignition timing of an engine based on an engine speed and wherein when the accelerator is turned on in a creep driving state, the anti-jerk function is temporarily stopped until the accelerator is turned off.

DE 195 23 898 A1 relates to a motor drive control method. Vibrations in a transmission are reduced or eliminated by a controller. Torque of the transmission is affected by the controller due to the difference between actual speed and a speed determined from transmission conditions.

The present invention was made in view of the above-described circumstances, and its object is to provide a method and device for vehicle driving control of a vehicle in a creep driving state, which are capable of eliminating an unnecessary shock ascribable to an anti-jerk function to improve drivability of a vehicle in which the clutch becomes in a half-engaged state at the time of the gear shift, and which are capable of suppressing an unnecessary shock ascribable to the anti-jerk function when an accelerator is turned on for starting, thereby improving drivability.

The above object is achieved by a method according to claim 1 or by a device according to claim 2.

According to a first aspect of the present invention, in a vehicle with an anti-jerk function of adjusting an ignition timing of an engine based on a difference between an actual speed and a reference speed of the engine when a sudden change in the difference is detected, the anti-jerk function is temporarily stopped when a gear shift is performed in the transmission. When an accelerator is turned on in a creep driving state, the anti-jerk function is also temporarily stopped until the accelerator is turned off.

According to a second aspect of the invention, a vehicle driving control device is proposed for controlling a vehicle which has an anti-jerk function of adjusting an ignition timing of an engine based on a difference between an actual speed and a reference speed of the engine when a sudden change in the difference is detected, the device including:
a creep driving discriminating means for generating signals corresponding to a start and an end of creep driving respectively;
a shift judging means for judging whether or not a gear shift is being performed in the transmission; and
a stopping means for stopping the anti-jerk function when the shift judging means judges that the gear shift is being performed.

In such a configuration, the device further includes an acceleration detecting means for detecting ON/OFF of the accelerator, wherein the stopping means stops the anti-jerk function until OFF of the accelerator is detected when the creep driving discriminating means detects the creep driving and the acceleration detecting means detects ON of the accelerator.

### Brief Description of the Drawings

- Fig. 1: is a block diagram showing a configuration example of a vehicle driving control device of an embodiment of the present invention;
- Fig. 2: is a block diagram showing a functional configuration example of an anti-jerk control unit realized in an engine ECU of the vehicle driving control device shown in Fig. 1; and
- Fig. 3: is a sub-routine flowchart showing the processing procedure executed by the engine ECU for controlling operations of an anti-jerk function.

### Description of Specific Embodiment

Hereinafter, details of the present invention will be described with reference to the attached drawings.

It should be noted that members, arrangement, and so on described below are not intended to limit the present invention, and various changes may be made without departing from the spirit of the present invention.

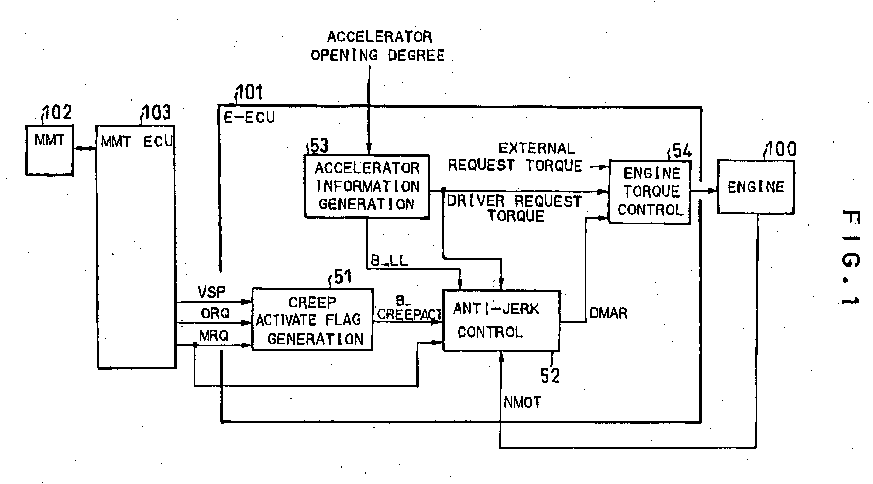

First, a configuration example of a vehicle driving control device in an embodiment of the present invention will be described with reference to Fig. 1.

The vehicle driving control device in the embodiment of the present invention includes as its main constituent elements: an engine electronic control unit (represented by 'E-ECU' in Fig. 1) 101 for controlling operations of an engine 100; a transmission (represented by'MMT' in Fig. 1) 102 changing a rotational driving force of the engine 100 to transmit it to wheels (not shown); and a transmission electronic control unit (represented by'MMT ECU' in Fig. 1) 103 controlling operations of the transmission 102.

First, the transmission 102 in the embodiment of the present invention has preferably a generally know configuration called a motor-type automated manual transmission (MMT). Specifically, this motor-type automated manual transmission is essentially a manual transmission, with an automatic clutch system and an automatic transmission function, and realizes a manual transmission operation and a transmission operation in an automatic mode, which corresponds to an automatic transmission operation, according to the selection by a driver. Particularly because of the use of a motor actuator for the connection of a clutch and the shift and selection of a transmission gear, it is called a motor-type.

The transmission electronic control unit (hereinafter, referred to as 'a transmission ECU') 103 controls the operation of the aforesaid transmission 102 based on information regarding a rotation operation of the engine 100 that is sent from the engine electronic control unit (hereinafter, referred to as 'an engine ECU') 101, is mainly constituted of a microcomputer (not shown) having a generally known configuration, and executes a program necessary for the operation control to realize the operation control of the transmission 102.

While controlling the operation of the transmission 102, the transmission ECU 103 described above outputs to the engine ECU 101, which will be described next, three pieces of information, as necessary information for idling speed control, the three pieces of information being gear position information VSP (represented by 'VSP' in Fig. 1), a control mode request value MRQ (represented by 'MRQ' in Fig. 1), and a creep request flag ORQ (represented by 'ORQ' in Fig. 1).

Here, the gear position information VSP is position information of transmission gears (not shown) of the transmission 102, that is, information indicating which transmission gear (not shown) is selected.

The control mode request value MRQ indicates a state of an operation control request to the engine ECU 101 from the transmission 102 and the transmission ECU 103, and a value preset according to the requested operation state is outputted.

The creep request flag ORQ is outputted when the transmission 102 is in a controlled state for creep driving.

These pieces of information are outputted from the transmission ECU 103 to the engine ECU 101 in predetermined code formats respectively.

The engine ECU 101 is mainly constituted of a microcomputer (not shown) having a generally known configuration, and in Fig. 1, a configuration example of its portions involved in an anti-jerk function are especially shown as functional blocks.

Specifically, the engine ECU 101 in the embodiment of the present invention includes: a creep activate flag generating unit (represented by 'creep activate flag generation' in Fig. 1) 51; an anti-jerk control unit (represented by 'anti-jerk control in Fig. 1) 52; an accelerator information generating unit (represented by 'accelerator information generation' in Fig. 1) 53; and an engine torque control unit (represented by 'engine torque control' in Fig. 1) 54. Concretely, these units 51 to 54 are realized by a microcomputer (not shown) executing programs.

The creep activate flag generating unit 51 generates and outputs a creep activate flag B_CREEPACT (represented by 'B_CREEPACT' in Fig. 1) which is a signal indicating the start and stop of creep driving, based on the three pieces of information, namely, the gear position information VSP, the control mode request value MRQ, and the creep request flag ORQ which are inputted from the transmission ECU 103. Concretely, for example, a logical value of the creep activate flag B_CREEPACT is set to High at an instant when the creep driving control starts, is thereafter kept High until the end of the creep driving control, and is set to Low when the creep driving control is terminated.

The anti-jerk control unit 52 detects the difference between a reference speed and an actual speed of the engine 100 and calculates a target torque difference DMAR (represented by 'DMAR' in Fig. 1), which is a torque corresponding to the difference, to input the calculated value to the later-described engine torque control unit 54, thereby functioning to adjust the ignition timing of the engine 100 via the engine torque control unit 54. By this function, the anti-jerk control unit 52 can contribute to stabilization of the vehicle behavior. Basic operations of the anti-jerk control unit 52 are the same as those generally known, but under predetermined conditions, the anti-jerk control unit 52 in the embodiment of the present invention stops its operation as will be described later. This is a function unique to the present invention.

The accelerator information generating unit 53 receives information on an accelerator opening degree from an external part, and it generates and outputs a driver request torque and an idling flag B_LL (represented by 'B_LL' in Fig. 1) based on the information on the accelerator opening degree.

Here, the driver request torque is a rotational torque of the engine 100 which is necessary for an opening degree indicated by the information on the accelerator opening degree, and it is calculated from a predetermined arithmetic expression to be outputted

Further, the idling flag B_LL is a flag indicating the idling state or not. Concretely, for example, '1' is set when it is judged based on the information on the accelerator opening degree that a not-shown accelerator is not depressed, namely, when it is judged that the current state is the idling state, and in other cases, '0' is set.

The engine torque control unit 54 controls the speed of the engine 100 so that a torque that the engine 100 requires at the current instant is outputted, the control being performed based on the aforesaid driver request torque from the accelerator information generating unit 53, an external request torque determined by various external factors, and input data on the target torque difference DMAR which is inputted from the anti-jerk control unit 52.

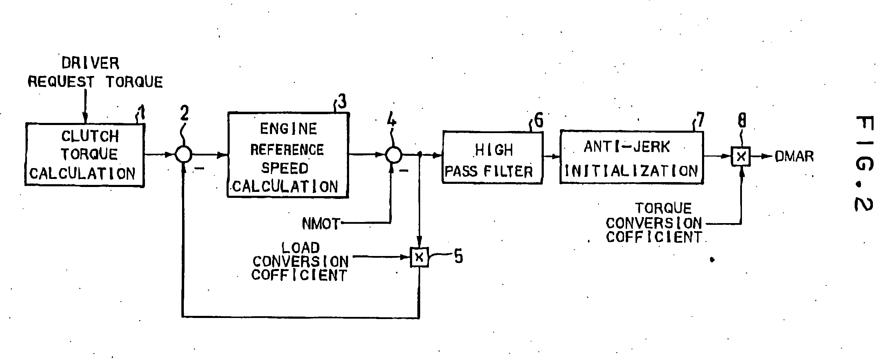

Fig. 2 shows a more concrete configuration example of the anti-jerk control unit 52 in the embodiment of the present invention as functional blocks. Hereinafter, this configuration example will be described with reference to Fig- 2.

The anti-jerk control unit 52 shown in Fig. 2 includes, as its main constituent elements, a clutch torque calculating unit (represented by 'clutch torque calculation' in Fig. 2) 1, a first addition/subtraction unit 2, an engine reference speed calculating unit (represented by 'engine reference speed calculation' in Fig. 2) 3, a second addition/subtraction unit 4, a first multiplication unit 5, a high pass filter unit (represented by 'high pass filter' in Fig. 2) 6, an anti-jerk initializing unit (represented by 'anti-jerk initialization' in Fig. 2) 7, and a second multiplication unit 8. These units are functionally realized by a microcomputer (not shown) executing programs.

The clutch torque calculating unit 1 calculates a torque required for the clutch (not shown), from a predetermined arithmetic expression based on the driver request torque.

The first addition/subtraction unit 2 receives the clutch torque and a multiplication result from the later-described first multiplication unit 5 and subtracts the multiplication result obtained in the first multiplication unit 5 from the clutch torque to output a subtraction result.

The engine reference speed calculating unit 3 calculates a reference speed of the engine 100 which is determined by a predetermined arithmetic expression for the above arithmetic result of the first addition/subtraction unit 2.

The second addition/subtraction unit 4 receives the aforesaid engine reference speed calculated in the engine reference speed calculating unit 3 and an actual engine speed NMOT and subtracts the actual engine speed NMOT from the engine reference speed to output a subtraction result.

The first multiplication unit 5 multiplies the aforesaid arithmetic value calculated in the second addition/subtraction unit 4, namely, the difference between the engine reference speed and the actual engine speed NMOT, by a load conversion coefficient to input a multiplication value to the aforesaid first addition/subtraction unit 2. Here, the load conversion coefficient is an arithmetic constant for converting the difference between the engine reference speed and the actual engine speed NMOT calculated in the second addition/subtraction unit 4 into a torque corresponding to the difference. Therefore, the value calculated by the first multiplication unit 5 is a torque corresponding to the difference between the engine reference speed and the actual engine speed NMOT and is fed back to the first addition/subtraction unit 2 as described above.

The high pass filter unit 6 allows only a difference presenting a sudden change to pass therethrough, out of the values calculated in the aforesaid second addition/subtraction unit 4, namely, out of the differences between the engine reference speed and the actual engine speed NMOT. In other words, when the sudden difference change for which the anti-jerk function has to work occurs in the difference between the engine reference speed and the actual engine speed NMOT, the high pass filter unit 6 detects this difference.

The anti-jerk initializing unit 7 controls the determination on whether or not the aforesaid calculated value in the second addition/subtraction unit 4 inputted via the high pass filter unit 6, namely, the difference between the engine reference speed and the actual engine speed NMOT should be inputted to the second multiplication unit 8 under predetermined conditions. That is, the anti-jerk initializing unit 7, which will be detailed later in detail, determines that the difference between the engine reference speed and the actual engine speed NMOT should not be outputted to the second multiplication unit 8 under the predetermined conditions and determines that the difference between the reference speed and the actual engine speed NMOT should be outputted to the second multiplication unit 8 under other conditions.

The second multiplication unit 8 is intended for calculating the torque corresponding to the difference between the engine reference speed and the actual engine speed NMOT inputted via the anti-jerk initializing unit 7, and for this purpose, it outputs, as the target torque difference DMAR, a value obtained by multiplying the difference between the engine reference speed and the actual engine speed NMOT by a torque conversion coefficient stored in advance.

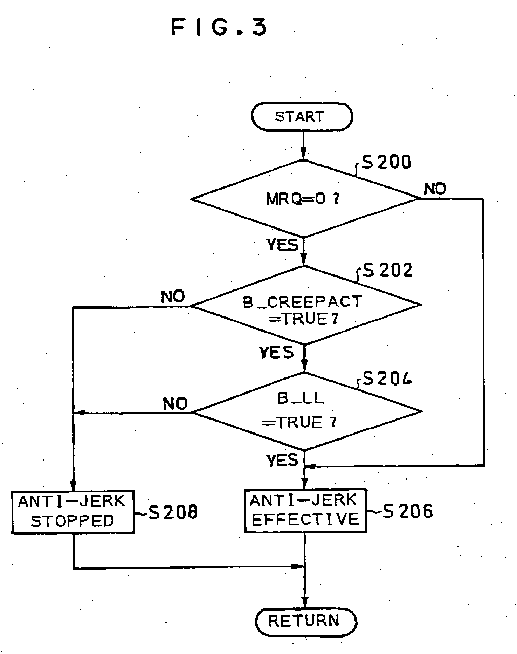

Next, the control over the operations of the anti-jerk function in the above-described configuration will be described with reference to the flowchart shown in Fig. 3.

Fig. 3 shows the processing procedure executed by the engine ECU 101 having the above-described configuration, for controlling the operations of the anti-jerk function. This processing is executed as one of various kinds of sub-routine processing executed by the engine ECU 101.

When the processing is started, it is first judged whether or not the control mode request value MRQ inputted from the transmission ECU 103 has a predetermined value, namely, '0' that is a predetermined value indicating that the transmission ECU 103 has given a request for operation control to the engine ECU 101 (see Step S200 in Fig. 3). When it is judged that the control mode request value MRQ = 0 (YES), it is determined that the transmission 102 is in some kind of operation state and the flow goes to processing at Step S202, which will be described next On the other hand, when it is not judged that the control mode request value MRQ = 0 (NO), it is determined that the current state is a normal driving state, and the flow goes to processing at Step S206, which will be described later.

At Step S202, it is judged whether or not the creep activate flag B_CEEPACT from the creep activate flag generating unit 51 has a predetermined value (TRUE) indicating that the current state is a creep driving state. When it is judged that it has the predetermined value (B_CREEPACT = TRUE) indicating that the current state is the creep driving state (YES), the flow goes to processing at Step S204, which will be described later. On the other hand, when it is judged that the creep activate flag B_CREEPACT does not have the predetermined value indicating that the current state is the creep driving state (NO), it is determined that the current state is a normal gear shift state, and the anti-jerk function is stopped (see Step S208 in Fig. 3).

Specifically, the anti-jerk initializing unit 7 inhibits the output signal of the high pass filter unit 6 from being inputted to the second multiplication unit 8. In other words, the input signal to the second multiplication unit 8 is forcibly set to zero. Therefore, it is possible to avoid a conventional phenomenon that the anti-jerk function detects the difference between the actual speed and the reference speed of the engine 100 occurring at the time of the gear shift to delay the ignition timing of the engine 100, causing an unintended shock to the vehicle. This can realize a comfortable gear shift.

Incidentally, from the viewpoint of surely avoiding the shock as has occurred conventionally, it is preferable that the stop of the anti-jerk function at the time of the gear shift lasts until a predetermined time period passes after the completion of the gear shift. Here, this predetermined time period differs depending on various actual conditions such as the size of a vehicle. Therefore, the predetermined time period is not limited to a specific value but is preferably determined based on experiments, simulations, and the like.

Then, after the processing at Step S208 is executed as described above, the flow once returns to a not-shown main routine.

At Step S204, it is judged whether or not the idling flag B_LL has a predetermined value (B_LL = TRUE) indicating that the current state is an idling state, in other words, indicating that a not-shown accelerator is OFF (is not depressed). When it is judged that the idling flag B_LL has the predetermined value (B_LL = TRUE) indicating that the current state is the idling state (YES), the creep driving is being performed while the accelerator (not shown) is OFF. Therefore, the anti-jerk function is made effective (see Step S206 in Fig. 3). Thereafter, a series of the processing is finished and the flow once returns to the not-shown main routine. That is, a normal anti-jerk function is realized. Specifically, the output of the high pass filter unit 6 is inputted to the second multiplication unit 8 via the anti-jerk initializing unit 7, and the target torque difference DMAR is calculated by the second multiplication unit 8 to be inputted to the engine torque control unit 54.

On the other hand, when it is judged at Step S204 that the idling flag B_LL does not have the predetermined value (B_LL= TRUE) indicating that the current state is the idling state, in other words, the not-shown accelerator is OFF (is not depressed) (NO), it is determined that the current state is changing from the creep driving state to a starting state by ON of the accelerator. Therefore, the anti-jerk function is stopped as described previously (see Step S208 in Fig. 3). Then, a series of the processing is finished and the flow once returns to the not-shown main routine. Therefore, until the clutch (not shown) is completely engaged after the accelerator is turned on for starting, the delay of the ignition timing of the engine 100 due to the detection of the difference between the actual speed and the reference speed of the engine 100 is not performed. This eliminates the conventionally occurring unintended shock caused by the operation of the anti-jerk function, so that comfortable driving start is ensured.

In the above-described configuration example, a creep driving discriminating means is realized by the creep activate flag generating unit 51 of the engine ECU 101, in other words, by the engine ECU 101 executing Step S200 and Step 202.

Further, a shift judging means is realized by the engine ECU 101 executing Step S200 and Step S202.

Moreover, a stopping means is realized by the engine ECU 101 executing Step S208.

Furthermore, an acceleration detecting means is realized by the engine ECU 101 executing Step S204.

According to the present invention, the anti-jerk function is temporarily stopped at the time of the gear shift and at the driving start by ON of the accelerator. Therefore, there occurs no unintended shock that has been conventionally given to a vehicle when the anti-jerk function works. This can provide an effect of improving drivability and running feeling.

## Claims

1. Method for vehicle driving control of a vehicle in a creep driving state in which an operation of a transmission is controllable, preferably in one of a manual mode and an automatic mode selected as desired, and which has an anti-jerk function of adjusting an ignition timing of an engine based on a difference between an actual speed and a reference speed of the engine when a sudden change in the difference is detected,
**characterized in**
**that** the anti-jerk function is temporarily stopped when a gear shift is performed in the transmission, that the anti-jerk function is temporarily stopped until a predetermined time passes after the gear shift is completed, and that, when an accelerator is turned on in a creep driving state, the anti-jerk function is temporarily stopped until the accelerator is turned off.

2. Device for vehicle driving control of a vehicle in a creep driving state in which an operation of a transmission is controllable, preferably in one of a manual mode and an automatic mode selected as desired, and which has an anti-jerk function of adjusting an ignition timing of an engine based on a difference between an actual speed and a reference speed of the engine when a sudden change in the difference is detected, the device comprising:
a creep driving discriminating means for generating signals corresponding to a start and an end of creep driving respectively;
a shift judging means for judging whether or not a gear shift is being performed in the transmission; and
a stopping means for stopping the anti-jerk function when the shift judging means judges that the gear shift is being performed; wherein
the stopping means stops the anti-jerk function until a predetermined time passes after the gear shift is completed, and
wherein the device further comprises an acceleration detecting means for detecting ON/OFF of an accelerator, and that, when the creep driving discriminating means detects the creep driving and the acceleration detecting means detects ON of the accelerator, the stopping means stops the anti-jerk function until OFF of the accelerator is detected.

3. Device according to claim 2, wherein the device comprises:
an acceleration detecting means for detecting ON/OFF of an accelerator; and
a stopping means for stopping the anti-jerk function until OFF of the accelerator is detected, when the creep driving discriminating means detects the creep driving and the acceleration detecting means detects ON of the accelerator.

## Patentansprüche

1. Verfahren zur Fahrzeugantriebssteuerung eines Fahrzeugs in einem Kriechfahrtzustand, in welchem ein Betrieb eines Getriebes, vorzugsweise in einem nach Wunsch gewählten manuellen Modus oder automatischen Modus, steuerbar ist und welches eine Antiruckelfunktion zum Einstellen eines Zündungszeitpunkts eines Motors auf der Basis einer Differenz zwischen einer tatsächlichen Drehzahl und einer Bezugsdrehzahl des Motors, wenn eine plötzliche Änderung der Differenz erkannt wird, aufweist,
**dadurch gekennzeichnet,**
**dass** die Antiruckelfunktion vorübergehend gestoppt wird, wenn ein Gangwechsel im Getriebe vorgenommen wird, dass die Antiruckelfunktion vorübergehend gestoppt wird, bis eine vorbestimmte Zeit nach der Durchführung des Gangwechsels vergeht, und dass, wenn ein Beschleuniger in einem Kriechfahrtzustand eingeschaltet wird, die Antiruckelfunktion vorübergehend gestoppt wird, bis der Beschleuniger ausgeschaltet wird.

2. Vorrichtung zur Fahrzeugantriebssteuerung eines Fahrzeugs in einem Kriechfahrtzustand, in welchem ein Betrieb eines Getriebes, vorzugsweise in einem nach Wunsch gewählten manuellen Modus oder einem automatischen Modus steuerbar ist und welche eine Antiruckelfunktion zum Einstellen eines Zündungszeitpunkts eines Motors auf der Basis einer Differenz zwischen einer tatsächlichen Drehzahl und einer Bezugsdrehzahl des Motors, wenn eine plötzliche Änderung der Differenz erkannt wird, aufweist, wobei die Vorrichtung aufweist:
ein Kriechfahrtunterscheidungsmittel zum Erzeugen von Signalen, die einem Beginn beziehungsweise einem Ende der Kriechfahrt entsprechen;
ein Gangwechselbeurteilungsmittel zum Beurteilen, ob ein Gangwechsel im Getriebe vorgenommen wird oder nicht; und
ein Stoppmittel zum Stoppen der Antiruckelfunktion, wenn das Gangwechselbeurteilungsmittel urteilt, dass der Gangwechsel vorgenommen wird; wobei
das Stoppmittel die Antiruckelfunktion stoppt, bis eine vorbestimmte Zeit nach der Durchführung des Gangwechsels vergeht, und
wobei die Vorrichtung ferner ein Beschleunigungserkennungsmittel zum Erkennen eines EIN/AUS eines Beschleunigers umfasst, und dass, wenn das Kriechfahrtunterscheidungsmittel die Kriechfahrt erkennt und das Beschleunigungserkennungsmittel ein EIN des Beschleunigers erkennt, das Stoppmittel die Antiruckelfunktion stoppt, bis ein AUS des Beschleunigers erkannt wird.

3. Vorrichtung nach Anspruch 2, wobei die Vorrichtung umfasst:
ein Beschleunigungserkennungsmittel zum Erkennen eines EIN/AUS eine Beschleunigers; und
ein Stoppmittel zum Stoppen der Antiruckelfunktion, bis ein AUS des Beschleunigers erkannt wird, wenn das Kriechfahrtunterscheidungsmittel die Kriechfahrt erkennt und das Beschleunigungserkennungsmittel ein EIN des Beschleunigers erkennt.

## Revendications

1. Procédé de commande de conduite de véhicule d'un véhicule dans un état de conduite à vitesse extra lente dans lequel un fonctionnement d'une transmission peut être commandé, de préférence dans l'un d'un mode manuel et d'un mode automatique sélectionné selon les souhaits, et qui a une fonction anti-saccades d'ajustement d'un calage de l'allumage d'un moteur sur la base d'une différence entre une vitesse réelle et une vitesse de référence du moteur lorsqu'une variation soudaine de la différence est détectée,
**caractérisé en ce que**
la fonction anti-saccades est temporairement arrêtée lorsqu'un changement de vitesse est effectué dans la transmission, la fonction anti-saccades est temporairement arrêtée jusqu'à ce qu'un temps prédéterminé se soit écoulé après l'achèvement du changement de vitesse, et, lorsqu'un accélérateur est enfoncé dans un état de conduite à vitesse extra lente, la fonction anti-saccades est temporairement arrêtée jusqu'à ce que l'accélérateur soit relâché.

2. Dispositif de commande de conduite de véhicule d'un véhicule dans un état de conduite à vitesse extra lente dans lequel un fonctionnement d'une transmission peut être commandé, de préférence dans l'un d'un mode manuel et d'un mode automatique sélectionné selon les souhaits, et qui a une fonction anti-saccades d'ajustement d'un calage de l'allumage d'un moteur sur la base d'une différence entre une vitesse réelle et une vitesse de référence du moteur lorsqu'une variation soudaine de la différence est détectée, le dispositif comprenant :
des moyens de discrimination de conduite à vitesse extra lente pour générer des signaux correspondant à un début et à une fin de conduite à vitesse extra lente, respectivement ;
des moyens de jugement de changement de vitesse pour juger si, oui ou non, un changement de vitesse est effectué dans la transmission ; et
des moyens d'arrêt pour arrêter la fonction anti-saccades lorsque les moyens de jugement de changement de vitesse jugent que le changement de vitesse est effectué ; dans lequel
les moyens d'arrêt arrêtent la fonction anti-saccades jusqu'à ce qu'un temps prédéterminé se soit écoulé après l'achèvement du changement de vitesse, et
dans lequel le dispositif comprend en outre des moyens de détection d'accélération pour détecter l'enfoncement/le relâchement d'un accélérateur, et, lorsque les moyens de discrimination de conduite à vitesse extra lente détectent la conduite à vitesse extra lente et que les moyens de détection d'accélération détectent l'enfoncement de l'accélérateur, les moyens d'arrêt arrêtent la fonction anti-saccades jusqu'à ce que le relâchement de l'accélérateur soit détecté.

3. Dispositif selon la revendication 2, dans lequel le dispositif comprend :
des moyens de détection d'accélération pour détecter l'enfoncement/le relâchement d'un accélérateur ; et
des moyens d'arrêt pour arrêter la fonction anti-saccades jusqu'à ce que le relâchement de l'accélérateur soit détecté, lorsque les moyens de discrimination de conduite à vitesse extra lente détectent la conduite à vitesse extra lente et que les moyens de détection d'accélération détectent l'enfoncement de l'accélérateur.
